# EUROPÄISCHE PATENTSCHRIFT

(11) **EP 3 882 723 B1**
(45) Veröffentlichungstag und Bekanntmachung des Hinweises auf die Patenterteilung: **03.05.2023**
(21) Anmeldenummer: 20164142.0
(22) Anmeldetag: 19.03.2020
(51) Int. Cl.: G05B 19/042

(54) **VERFAHREN ZUR ADRESSVERGABE AN BUSTEILNEHMER**
METHOD FOR ALLOCATING ADDRESSES TO BUS USERS
PROCÉDÉ D'ATTRIBUTION D'ADRESSES À DES PARTICIPANTS DE BUS

(43) Veröffentlichungstag der Anmeldung: 22.09.2021
(73) Patentinhaber: Schneider Electric Industries SAS, 92500 Rueil Malmaison (FR)
(72) Erfinder: Kempf, Johannes, 63911 Klingenberg am Main (DE); Gorisse, François, 06250 Mougins (FR); Sobocinski, Maxime, 06220 Le Golfe Juan (FR)
(74) Vertreter: Manitz Finsterwald Patent- und Rechtsanwaltspartnerschaft mbB

(56) Entgegenhaltungen:
- DE-A1- 10 147 512
- DE-A1-102005 056 294
- DE-A1-102007 041 941
- DE-A1-102015 107 865
- DE-C1- 4 038 992
- US-A1- 2003 167 360
- US-A1- 2009 235 124

## Beschreibung

Die vorliegende Erfindung betrifft ein Verfahren zur Adressvergabe an an einen Datenbus angeschlossene Busteilnehmer.

Für automatisierte industrielle Prozesse werden üblicherweise eine Vielzahl von Feldgeräten, beispielsweise I/O-Module, benötigt, die den industriellen Prozess überwachen und steuern. Die I/O-Module wiederum werden z.B. mittels einer speicherprogrammierbaren Steuerung (SPS) über einen Datenbus angesteuert. Die SPS kann dabei verschiedene Busteilnehmer über deren jeweilige Busadresse ansprechen.

Bei der Installation der Busteilnehmer müssen den Busteilnehmern dafür Busadressen zugewiesen werden, welche bevorzugt auch die jeweilige physikalische Position des Busteilnehmers widerspiegeln. Eine solche Zuweisung von Busadressen an Busteilnehmer kann mit hohem Aufwand verbunden sein. Zudem kann es notwendig sein, die Adressvergabe zu wiederholen, sobald eine Änderung an den Busteilnehmern vorgenommen wird.

Aus der DE 101 47 512 A1 ist ein Verfahren zur Adressvergabe bekannt, bei welchem jeweils ein Teilnehmer anhand einer fehlenden gemessenen Spannung erkennt, dass dieser Teilnehmer eine von einer Zentralsteuereinheit übertragene Adresse übernehmen soll.

Die DE 40 38 992 C1 lehrt ein Verfahren, bei dem ein Teilnehmer, welcher einen von einer Zentrale eingeprägten Strom misst, eine zu vergebende Adresse übernimmt.

Es ist die der Erfindung zugrundeliegende Aufgabe, die Adressvergabe an an einen Datenbus angeschlossene Busteilnehmer zu vereinfachen.

Diese Aufgabe wird durch ein Verfahren gemäß Anspruch 1 gelöst.

Die Erfindung basiert auf dem Grundgedanken, dass durch eine Veränderung des Prüfstromkreises z.B. die Position des Busteilnehmers ohne Busadresse ermittelt werden kann, insbesondere dann, wenn der Busteilnehmer ohne Busadresse die Veränderung vornimmt. Alternativ ist es natürlich auch möglich, dass (z.B. alle) Busteilnehmer mit Adresse die Veränderung vornehmen und dann erkannt werden kann, welche Busteilnehmer keine Veränderung vornehmen und dementsprechend noch keine Busadresse besitzen.

Allgemein kann aus der Veränderung erkannt werden, dass zumindest ein Busteilnehmer ohne Busadresse existiert. Zudem kann beispielsweise die Position dieses Busteilnehmers automatisiert ermittelt werden, so dass dann dem Busteilnehmer ohne Busadresse eine Busadresse zugewiesen werden kann. Die Zuweisung der Busadressen kann dementsprechend automatisch erfolgen. Zudem ist es möglich, anhand der erkannten physikalischen/mechanischen Position des Busteilnehmers eine Busadresse zuzuweisen, welche der physikalischen Position entspricht.

Die Erfassung der physikalischen Position wird dabei insbesondere durch die Prüfelemente in den Grundplatten ermöglicht. Die Prüfelemente sind bevorzugt der Zentraleinheit bekannt, so dass aus der Charakteristik des Prüfstromkreises (d.h. z.B. aus dem Prüfstrom) darauf geschlossen werden kann, wo der Busteilnehmer ohne Busadresse angeordnet ist.

Nachfolgend werden noch weitere Details des erfindungsgemäßen Verfahrens beschrieben.

Die Zentraleinheit kann insbesondere Teil einer speicherprogrammierbaren Steuerung (SPS) sein oder an eine solche angeschlossen sein. Die Zentraleinheit kann beispielsweise auch als Buskoppler dienen, welcher die Busteilnehmer als ein einziges oder als mehrere Feldbusgeräte in einem Feldbus zur Verfügung stellt. In diesem Fall kann die SPS dann über den Feldbus mit der als Buskoppler wirkenden Zentraleinheit kommunizieren.

Bei der Grundplatte kann es sich insbesondere um ein benachbart oder angrenzend an den jeweiligen Busteilnehmer angeordnetes Element handeln, an welchem der Busteilnehmer insbesondere auch mechanisch befestigt sein kann. Die Grundplatten können zumindest bereichsweise plattenförmig und bevorzugt elektrisch entlang einer Reihe miteinander verbunden sein. Hierbei können die Grundplatten direkt oder über elektrische Leitungen miteinander verbunden werden. Beispielsweise kann jede Grundplatte zwei Eingangskontakte und zwei Ausgangskontakte aufweisen, wobei zwischen einem Eingangs- und einem Ausgangskontakt das Prüfelement geschaltet sein kann, wohingegen die verbleibenden Kontakte elektrisch direkt miteinander verbunden sein können (Rückleitung). Nach der letzten Grundplatte kann zudem noch ein Abschlusselement vorgesehen sein, welches die beiden Ausgangskontakte der letzten Grundplatte elektrisch miteinander verbindet. Das Abschlusselement kann in der Verbindung ebenfalls ein Prüfelement aufweisen. Das Abschlusselement kann den Prüfstromkreis somit auf einer Seite der Reihe der Grundplatten abschließen, wohingegen die Zentraleinheit auf der dem Abschlusselement gegenüberliegenden Seite den Prüfstromkreis abschließt bzw. schließt.

Bevorzugt ist für jeden Busteilnehmer genau ein Prüfelement und/oder genau eine Grundplatte vorhanden. Es besteht also insbesondere eine 1:1-Zuordnung zwischen Busteilnehmern und Prüfelementen und/oder Grundplatten.

Die Zentraleinheit wird dann an den Prüfstromkreis angeschlossen, wobei insbesondere die Zentraleinheit einen Prüfstrom in den Prüfstromkreis einprägt, z.B. durch Anlegen einer festen Spannung.

Während des Einprägens des Prüfstroms kann den Busteilnehmern mitgeteilt werden, dass nun Busteilnehmer ohne Busadresse ermittelt werden sollen. Daraufhin können die Busteilnehmer ohne Busadresse (oder wie oben beschrieben alternativ auch z.B. alle Busteilnehmer mit Busadresse) eine Veränderung des Prüfstromkreises vornehmen. Beispielsweise kann der Prüfstromkreis von den Busteilnehmern ohne Busadresse kurzgeschlossen werden, so dass der Prüfstromkreis dann "verkürzt" wird und in dem Prüfstromkreis nur noch weniger Prüfelemente elektrisch wirksam sind. Die Veränderung an dem Prüfstromkreis kann dann von der Zentraleinheit gemessen werden, beispielsweise indem ein veränderter Spannungsabfall oder ein veränderter Prüfstrom erfasst wird.

Aufgrund der Veränderung kann von der Zentraleinheit ermittelt werden, welcher oder welche Busteilnehmer noch keine Busadresse besitzen. So kann z.B. erkannt werden, dass bei einem "verkürzten" Prüfstromkreis ein Busteilnehmer ohne Busadresse am Ende dieses verkürzten Prüfstromkreises angeordnet sein muss.

Dem oder den so erkannten Busteilnehmer(n) kann/können dann Busadresse(n) zugewiesen werden. Bei einer Busadresse kann es sich beispielsweise um eine IP-Adresse bzw. Ethernet-Adresse oder um einen CAN-Identifier handeln.

Vorteilhafte Weiterbildungen der Erfindung sind der Beschreibung, den Zeichnungen sowie den abhängigen Ansprüchen zu entnehmen.

Gemäß einer Ausführungsform umfasst die Veränderung durch den die Veränderung vornehmenden Busteilnehmer ein Kurzschließen des Prüfstromkreises. Das Kurzschließen erfolgt dabei insbesondere derart, dass sämtliche (von der Zentraleinheit aus gesehen) Grundplatten und damit auch Prüfelemente, welche nach dem die Veränderung vornehmenden Busteilnehmer angeordnet sind, elektrisch aus dem Prüfstromkreis entfernt werden. Durch das Kurzschließen kann die Zentraleinheit temporär somit nur noch die Prüfelemente bis hin zu dem die Veränderung vornehmenden Busteilnehmer erfassen, wodurch der Prüfstromkreis verändert wird. Aufgrund der so messbaren Veränderung kann die mechanische Position des die Veränderung vornehmenden Busteilnehmers erfasst werden, welcher der Zentraleinheit am nächsten ist (d.h. in der Reihenfolge der Grundplatten gesehen).

Bei der Veränderung muss es sich nicht zwangsläufig um ein Kurzschließen des Prüfstromkreises handeln. Die Veränderung könnte auch durch beispielsweise ein Einspeisen von Strom oder Spannung, das Setzen eines Punkts des Prüfstromkreises auf ein Referenzpotential oder ähnlichem erfolgen. Die Veränderung kann grundsätzlich beliebiger Natur sein, solange für die Zentraleinheit ersichtlich ist, wo ein, z.B. erster, Busteilnehmer positioniert ist, der die Veränderung vornimmt. Insbesondere muss auch für nachfolgende Busteilnehmer ersichtlich sein, dass ein vorheriger Busteilnehmer schon eine Veränderung vorgenommen hat.

Gemäß einer weiteren Ausführungsform erfolgt die Veränderung des Prüfstromkreises auf eine Anforderungsnachricht der Zentraleinheit hin, wobei die Anforderungsnachricht bevorzugt als Broadcast gesendet wird. Weiter bevorzugt wird auf die Anforderungsnachricht die Veränderung des Prüfstromkreises von den Busteilnehmern vorgenommen, welchen noch keine Busadresse zugewiesen wurde. Die Anforderungsnachricht kann bevorzugt über den Datenbus per Broadcast gesendet werden, da auch Busteilnehmer ohne schon zugewiesene Busadresse einen Broadcast empfangen können. Ein Broadcast kann auch als Rundrufnachricht bezeichnet werden, welche dazu bestimmt ist, von sämtlichen Busteilnehmern empfangen und verarbeitet zu werden. Auf den Broadcast hin können dann sämtliche Teilnehmer, welche noch keine Busadresse besitzen, eine Veränderung des Prüfstromkreises vornehmen.

Umfasst der Prüfstromkreis beispielsweise zehn Grundplatten mit einer entsprechenden Anzahl an Prüfelementen und wird von einem Busteilnehmer auf Grundplatte #3 der Prüfstromkreis kurzgeschlossen, so kann die Zentraleinheit beispielsweise nur noch die ersten drei Prüfelemente (d.h. die Prüfelemente der Grundplatten #1 bis #3) erfassen. Hierdurch ist dann für die Zentraleinheit ersichtlich, dass der erste Busteilnehmer ohne Busadresse auf Grundplatte #3 sitzt, wodurch diesem Busteilnehmer dann eine passende Busadresse zugewiesen werden kann, wie nachfolgend ausgeführt.

Allgemein wird nach der Anforderungsnachricht und der Veränderung des Prüfstromkreises durch einen oder mehrere Busteilnehmer eine Ermittlung der Position zumindest eines die Veränderung vornehmenden Busteilnehmers vorgenommen, wobei insbesondere die Position des ersten bzw. des der Zentraleinheit nächsten die Veränderung vornehmenden Busteilnehmers erfolgt.

Gemäß einer weiteren Ausführungsform wird nach dem Ermitteln der Position des, insbesondere ersten, die Veränderung vornehmenden Busteilnehmers die Busadresse mittels einer bevorzugt als Broadcast gesendeten, Zuweisungsnachricht zugewiesen. Nachdem der Busteilnehmer die Veränderung an dem Prüfstromkreis vorgenommen hat, trifft dann über den Datenbus die Zuweisungsnachricht ein, woraufhin der Busteilnehmer dann die in der Zuweisungsnachricht enthaltene Busadresse übernimmt.

Gemäß einer weiteren Ausführungsform wird zur Detektion, ob durch einen der Zentraleinheit näheren Busteilnehmer eine Veränderung des Prüfstromkreises vorgenommen wird, eine Spannung an dem Prüfelement der Grundplatte des jeweiligen Busteilnehmers, insbesondere mittels eines Komparators, ermittelt. Ist die Spannung Null, d.h. wenn beispielsweise kein Strom an einem als Widerstand ausgebildeten Prüfelement vorliegt, ist der Busteilnehmer nicht der am nächsten zur Zentraleinheit liegende Busteilnehmer, welcher eine Veränderung vorgenommen hat. In diesem Fall übernimmt der Busteilnehmer nicht die in der Zuweisungsnachricht enthaltene Busadresse. Auf diese Weise wird verhindert, dass mehrere Busteilnehmer dieselbe Busadresse übernehmen.

Bevorzugt digitalisiert der Komparator die Spannung am Prüfelement, wobei der Komparator insbesondere an einem ersten GPIO-Pin (General Purpose Input Output Pin) des Busteilnehmers angeschlossen sein kann. Der erste GPIO-Pin kann zudem als Eingang konfiguriert sein. Die Implementierung auf Seiten der Busteilnehmer wird hierdurch stark vereinfacht, da eine Übernahme der in der Zuweisungsnachricht enthaltenen Busadresse lediglich dann erfolgt, wenn an dem GPIO-Pin z.B. ein High-Level anliegt.

Die Veränderung des Prüfstromkreises kann über einen zweiten GPIO-Pin des Busteilnehmers erfolgen, welcher als Ausgang konfiguriert ist. An den zweiten GPIO-Pin kann z.B. eine Basis oder ein Gate eines Transistors angeschlossen sein, welcher zwischen die Eingangs- oder die Ausgangskontakt der Grundplatte des jeweiligen Busteilnehmers geschaltet ist, um z.B. wahlweise einen Kurzschluss zwischen beiden Eingangs- oder beiden Ausgangskontakten zu bewirken. Wird der Transistor dann mittels des zweiten GPIO-Pins leitend geschaltet, ergibt sich ein Kurzschluss, so dass eine Veränderung des Prüfstromkreises vorliegt. Nachdem der Busteilnehmer die Busadresse übernommen hat, wird bevorzugt das Verändern des Prüfstromkreises beendet, so dass dann andere Busteilnehmer mittels derselben Verfahrensschritte ihre Busadresse erhalten können.

Es versteht sich, dass durch den Transistor auch zusätzliche elektrische Bauelemente in den Prüfstromkreis eingekoppelt (oder auch ausgekoppelt) werden können, sodass auf diese Weise dann eine Veränderung des Prüfstromkreises vorliegt, die insbesondere keinen Kurzschluss umfasst.

Gemäß einer weiteren Ausführungsform erfolgt mittels der Grundplatte auch die Übertragung des Datenbusses an die Busteilnehmer und die Zentralsteuerung. Die Grundplatte kann also Übertragungsmittel für den Datenbus aufweisen, beispielsweise zwei oder vier weitere Leitungen für einen CAN-Bus (Controller Area Network Bus). Der Datenbus kann auch insbesondere ein Feldbus, wie der CANopen-Bus sein. Es sind aber auch andere Feldbusse wie SERCOS, Ethernet/IP und dergleichen denkbar. Es versteht sich aber, dass als Datenbus auch andere Kommunikationsbusse eingesetzt werden können, unabhängig vom verwendeten Protokoll.

Gemäß einer weiteren Ausführungsform umfasst das Prüfelement jeweils einen ohmschen Widerstand und/oder eine Diode. Weiter bevorzugt sind die Prüfelemente der Grundplatten jeweils gleich.

Die Prüfelemente der Grundplatten können der Zentraleinheit bekannt sein. Durch die bekannten Prüfelemente kann die Zentraleinheit bei einem bekannten eingeprägten Prüfstrom oder einer bekannten an den Prüfstromkreis angelegten Spannung dann ermitteln, wie viele und/oder welche Prüfelemente momentan in dem Prüfstromkreis elektrisch wirksam sind. Sind beispielsweise bei einem Kurzschlie-ßen durch den Busteilnehmer auf Grundplatte #3 nur drei Prüfelemente elektrisch wirksam im Prüfstromkreis, wird die Zentraleinheit bei gleichem eingeprägten Prüfstrom eine geringere Spannung ermitteln können, als wenn beispielsweise zehn Prüfelemente in dem Prüfstromkreis elektrisch wirksam sind. Insbesondere kann aus der am Prüfstromkreis anliegenden Spannung und/oder dem Strom des Prüfstromkreises die mechanische Position des die Veränderung vornehmenden Busteilnehmers ermittelt werden.

Grundsätzlich kann es sich bei dem Prüfelement auch um ein anderes passives Bauelement handeln, wie beispielsweise Spulen oder Kondensatoren. In diesem Fall kann der Prüfstrom beispielsweise ein Wechselstrom sein. Unter dem Einprägen eines Prüfstroms ist zu verstehen, dass die Zentraleinheit eine vorbestimmte Spannung an den Prüfstromkreis anlegt oder einen vorbestimmten Strom in den Prüfstromkreis einprägt. Die Zentraleinheit kann die Spannung und/oder den Strom an/in dem Prüfstromkreis messen.

Ebenfalls ist es möglich, dass es sich bei den Prüfelementen um aktive Bauteile handelt, beispielsweise um Spannungsquellen oder Stromquellen. Hierbei ist es dann z.B. möglich, dass die Zentraleinheit die kumulierte Spannung misst, welche von den verschiedenen Spannungsquellen im Prüfstromkreis erzeugt wird. Hierbei wäre die Spannung dann umso höher, umso mehr Prüfelemente zu einem Zeitpunkt elektrisch im Prüfstromkreis wirksam sind.

Alternativ oder zusätzlich können die Prüfelemente auch eine zeitliche Veränderung des Prüfstromkreises und/oder des Prüfstroms bewirken, sodass z.B. eine zeitliche Verzögerung und/oder eine Taktbeeinflussung eines getakteten Prüfstroms erfolgen kann.

Gemäß einer weiteren Ausführungsform wird erkannt, ob eine oder mehrere Grundplatten ohne Busteilnehmer vorhanden sind. Die Erkennung kann insbesondere von der Zentraleinheit vorgenommen werden. Hierzu kann (z.B. von der Zentraleinheit) eine Liste aller vergebenen und nicht vergebenen Adressen geführt werden. Aus der Liste ergibt sich dann, auf welchen Grundplatten kein Busteilnehmer vorhanden ist. Insbesondere können alle Busteilnehmer auch nacheinander kurz eine Veränderung des Prüfstromkreises vornehmen (z.B. auf Aufforderung durch die Zentraleinheit), um die Liste so aktuell zu halten.

Aus der Liste kann dann auch gemäß einer Ausführungsform eine Position zumindest einer Grundplatte ohne Busteilnehmer ermittelt werden. Hierdurch kann bevorzugt die mechanische Position von leeren Grundplatten bekannt sein. Dies kann dann z.B. in einem Planungstool angezeigt werden.

Wie bereits erwähnt, kann gemäß einer Ausführungsform nach der letzten Grundplatte ein Abschlusselement vorgesehen sein, welches den Prüfstromkreis schließt. Bevorzugt kann ein Fehlen des Abschlusselements von der Zentraleinheit erkannt werden. Das Fehlen kann insbesondere durch einen komplett unterbrochenen Stromfluss im Prüfstromkreis erkannt werden.

Gemäß einer weiteren Ausführungsform wird das Verfahren wiederholt ausgeführt, insbesondere bis allen Busteilnehmern eine Busadresse zugewiesen ist. Bevorzugt werden zumindest die Schritte des Veränderns des Prüfstromkreises, das Aussenden der Zuweisungsnachricht und das Übernehmen der Busadresse aus der Zuweisungsnachricht durch den Busteilnehmer ohne Busadresse, welcher der Zentraleinheit am nächsten ist, wiederholt ausgeführt.

Um die Abläufe zusammenzufassen, wird nachfolgend beispielhaft von einem System ausgegangen, bei welchem zehn Grundplatten vorhanden sind, wobei jede Grundplatte mit einem Busteilnehmer verbunden ist. Für dieses Beispiel wird angenommen, dass lediglich die Busteilnehmer auf Grundplatte #3 und Grundplatte #6 noch keine Busadresse besitzen. Weiterhin wird angenommen, dass die Zentraleinheit eine konstante Spannung an dem Prüfstromkreis anlegt und die Prüfelemente in allen Grundplatten gleiche ohmsche Widerstände sind. Um den Busteilnehmern auf Grundplatte #3 und #6 nun Busadressen zuzuweisen, wird von der Zentraleinheit eine Anforderungsnachricht per Broadcast an alle Busteilnehmer gesandt, woraufhin die Busteilnehmer #3 und #6 den Prüfstromkreis an ihrer Grundplatte jeweils kurzschließen. Da der Busteilnehmer #3 der Zentraleinheit näher ist, werden alle Busteilnehmer hinter dem Busteilnehmer #3 (somit auch der Busteilnehmer #6) für den Prüfstromkreis elektrisch unwirksam, wodurch die Zentraleinheit erkennt, dass im Prüfstromkreis nur noch drei Widerstände (d.h. die Widerstände bis zur Grundplatte #3) elektrisch wirksam sind. Dies spiegelt sich in einer entsprechenden Stromänderung im Prüfstromkreis wider. Aus dem Strom des Prüfstromkreises kann die Zentraleinheit dann ermitteln, dass der Busteilnehmer auf Grundplatte #3 noch keine Busadresse besitzt. Die Busadresse (z.B. Busadresse #3) für den Busteilnehmer auf Grundplatte #3 wird dann mittels einer Zuweisungsnachricht per Broadcast an alle Busteilnehmer übermittelt. Die Busteilnehmer, welche bereits eine Busadresse besitzen, ignorieren dann diese Nachricht. Auch der Busteilnehmer #6 ignoriert die Nachricht, da er mittels des Komparators und des ersten GPIO-Pins erkennt, dass ein der Zentraleinheit näherer Busteilnehmer diese Adresse erhalten soll. Der Busteilnehmer #3 erkennt über seinen auf einem High-Level liegenden ersten GPIO-Pin, dass er der Zentraleinheit nächste Busteilnehmer ohne Busadresse ist und übernimmt die Busadresse aus der Zuweisungsnachricht. Danach beendet der Busteilnehmer #3 das Kurzschlie-ßen des Prüfstromkreises. Durch das Beenden des Kurzschließens durch den Busteilnehmer #3, werden nun alle Prüfelemente bis zum Busteilnehmer #6 elektrisch im Prüfstromkreis wirksam. Hierdurch ändert sich wiederum der Strom im Prüfstromkreis, so dass die Zentraleinheit nun erkennen kann, dass der Busteilnehmer #6 noch keine Busadresse besitzt. Die Busadresse (z.B. Busadresse #6) für den Busteilnehmer #6 wird dann wiederum per Broadcast mittels einer Zuweisungsnachricht versandt und vom Busteilnehmer #6 übernommen. Nachdem der Busteilnehmer #6 die Busadresse erhalten hat, beendet auch dieser das Kurzschließen des Prüfstromkreises. Die Zentraleinheit kann daraufhin anhand des sich nochmals veränderten Stroms im Prüfstromkreis erkennen, dass nun sämtliche Prüfelemente elektrisch wirksam im Prüfstromkreis sind. Dementsprechend existiert kein Busteilnehmer mehr, welcher keine Busadresse besitzt.

Weiter bevorzugt wird wiederholt und/oder zyklisch die Anforderungsnachricht von der Zentraleinheit versandt. Hierdurch wird es dann möglich, dass neu hinzugekommene Geräte (z.B. mittels Hot-Swap) automatisiert eine Busadresse erhalten und somit in das System eingebunden werden können. Ebenfalls ist es möglich, dass der Strom und/oder die Spannung des Prüfstromkreises durch die Zentraleinheit dauerhaft oder wiederholt gemessen werden, um neue Busteilnehmer zu erkennen. Neue Busteilnehmer können insbesondere auf sich hinweisen, indem sie eine Veränderung an dem Prüfstromkreis vornehmen. Das hierin beschriebene Verfahren kann bei Erkennen eines neuen Busteilnehmers dann nochmals ausgeführt werden.

Gemäß einer weiteren Ausführungsform sind die Busteilnehmer lösbar mit der jeweiligen Grundplatte verbunden und insbesondere mittels Steckverbindern elektrisch mit der jeweiligen Grundplatte gekoppelt. Bevorzugt können die Busteilnehmer z.B. auf die Grundplatte aufgeklipst werden, wobei die Busteilnehmer bevorzugt werkzeuglos von der Grundplatte wieder lösbar sind. Beim Verbinden oder Befestigen eines Busteilnehmers mit der jeweiligen Grundplatte können die elektrischen Verbindungen zwischen Busteilnehmer und Prüfstromkreis sowie zwischen Busteilnehmer und Datenbus insbesondere automatisch hergestellt werden.

Gemäß einer weiteren Ausführungsform ist der Datenbus ein Feldbus und/oder die Busteilnehmer sind zumindest teilweise Input-Output-Module (I/O-Module). Bei den Busteilnehmern kann es sich dementsprechend um Feldgeräte handeln.

Weiterer Gegenstand der Erfindung ist ein System umfassend eine Zentraleinheit und eine Mehrzahl von Busteilnehmern, welche jeweils mit einer Grundplatte elektrisch und insbesondere auch mechanisch gekoppelt sind, wobei die Busteilnehmer an einen Datenbus angeschlossen sind, wobei
- die Grundplatten jeweils ein elektrisches Prüfelement umfassen,
- die Grundplatten entlang einer Reihe elektrisch jeweils mit benachbarten Grundplatten verbunden sind, wodurch die Grundplatten einen Prüfstromkreis bilden, in welchem die Prüfelemente bevorzugt in Reihe geschaltet sind,
- die Zentraleinheit an den Prüfstromkreis angeschlossen ist,
- ein Prüfstrom in den Prüfstromkreis eingeprägt wird,
- zumindest ein Busteilnehmer, insbesondere ein Busteilnehmer ohne Busadresse, ausgebildet ist, eine Veränderung des Prüfstromkreises vorzunehmen,
- die Zentraleinheit ausgebildet ist, die Veränderung des Prüfstromkreises zu messen,
- die Zentraleinheit ausgebildet ist, basierend auf der Veränderung des Prüfstromkreises eine Position des die Veränderung vornehmenden Busteilnehmers oder des Busteilnehmers ohne Busadresse zu ermitteln und dem die Veränderung vornehmenden Busteilnehmer oder dem Busteilnehmer ohne Busadresse eine Busadresse zuzuweisen.

Die Ausführungen zu dem erfindungsgemäßen Verfahren gelten für das erfindungsgemäße System entsprechend. Dies gilt insbesondere hinsichtlich Vorteilen und Ausführungsformen.

Nachfolgend wird die Erfindung rein beispielhaft unter Bezugnahme auf die Zeichnungen beschrieben. Es zeigen:
- Fig. 1: ein System umfassend eine Zentraleinheit sowie mehrere auf Grundplatten angebrachte Busteilnehmer; und
- Fig. 2: einen Ablaufplan zur Zuweisung von Busadressen an die Busteilnehmer.

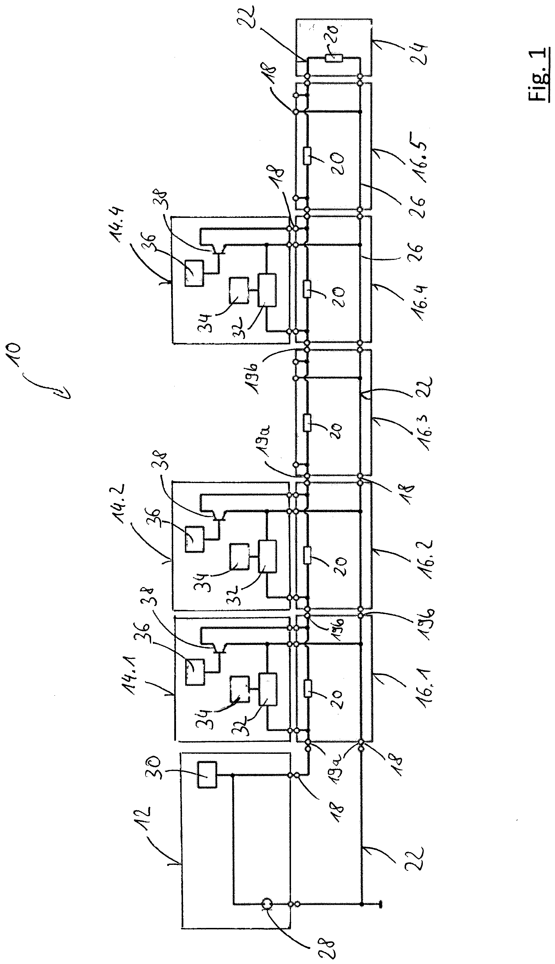

Fig. 1 zeigt ein System 10, welches eine Zentraleinheit 12 sowie drei Busteilnehmer 14.1, 14.2 und 14.4 aufweist.

Die Busteilnehmer 14 sind auf Grundplatten 16 befestigt, wobei in Fig. 1 beispielhaft fünf Grundplatten 16.1, 16.2, 16.3, 16.4 und 16.5 gezeigt sind. An die Grundplatten 16 sind mittels Steckverbindern 18 die Zentraleinheit 12 sowie die Busteilnehmer 14 elektrisch angeschlossen. Auch die Grundplatten 16 sind untereinander mittels Steckverbindern 18 elektrisch gekoppelt.

Die beiden der Zentraleinheit 12 zugewandten Steckverbinder 18 einer jeweiligen Grundplatte 16 dienen als Eingangskontakte 19a, wohingegen die beiden der Zentraleinheit 12 abgewandten Steckverbinder 18 einer jeweiligen Grundplatte 16 als Ausgangskontakte 19b fungieren.

Jede Grundplatte 16 umfasst ein Prüfelement, welches hier in der Form eines Prüf-Widerstands 20 dargestellt ist. Der Prüf-Widerstand 20 ist jeweils zwischen zwei Steckverbindern 18 angeordnet und bildet eine Hinleitung in einem Prüfstromkreis 22. Der Prüfstromkreis 22 umfasst zudem ein Abschlusselement 24, wobei das Abschlusselement 24 ebenfalls einen Prüf-Widerstand 20 umfasst, welcher eine Verbindung zu Rückleitungen 26 in den Grundplatten 16 herstellt.

Die Prüf-Widerstände 20 weisen jeweils einen ohmschen Widerstand von 100 Ω auf.

In der Zentraleinheit 12 ist eine Stromquelle 28 in den Prüfstromkreis 22 geschaltet, welche einen konstanten Prüfstrom von 3 mA in den Prüfstromkreis einprägt.

Die Zentraleinheit 12 umfasst zudem einen Analog-Digital-Konverter (ADC) 30, welcher die am Prüfstromkreis 22 momentan herrschende Spannung erfasst.

Jeder Busteilnehmer 14 umfasst zudem einen Komparator 32, welcher eine jeweils an der Grundplatte 16 anliegende Spannung oder einen Strom in dem Prüfstromkreis 22 erfasst. Der Komparator 32 ist über einen ersten GPIO-Pin 34 auslesbar.

Ein zweiter GPIO-Pin 36 steuert jeweils einen Transistor 38 des jeweiligen Busteilnehmers 14 an. Mittels des Transistors 38 kann ein Kurzschließen des Prüfstromkreises 22 nach dem jeweiligen Prüf-Widerstand 20 erfolgen.

Der besseren Übersicht halber ist in den Figuren ein Datenbus nicht gezeigt, z.B. ein CAN-Bus, über welchen die Zentraleinheit 12 und sämtliche Busteilnehmer 14 miteinander kommunizieren.

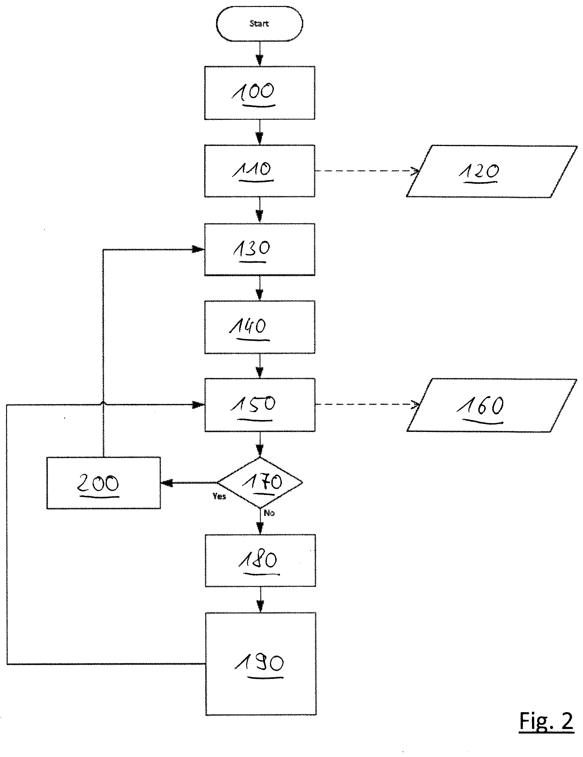

Fig. 2 zeigt nun den Ablauf der Adresszuweisung an die Busteilnehmer 14. Für das folgende Beispiel wird davon ausgegangen, dass lediglich der Busteilnehmer 14.1 bereits eine Busadresse besitzt und die Busteilnehmer 14.2 und 14.4 noch keine Busadresse aufweisen.

Solange die Busteilnehmer noch keine Anforderungsnachricht von der Zentraleinheit 12 erhalten haben, sind im Schritt 100 die zweiten GPIO-Pins 36 deaktiviert, so dass kein Kurzschließen des Prüfstromkreises 22 erfolgt. Im Schritt 110 ermittelt die Zentraleinheit 12 dann durch den ADC 30 die momentane Spannung am Prüfstromkreis 22. Hierdurch kann dann in Schritt 120 auf die Anzahl der Grundplatten 16 rückgeschlossen werden. Im Schritt 130 schickt die Zentraleinheit 12 über den Datenbus als Broadcast eine Anforderungsnachricht, die Busteilnehmer 14 ohne Busadresse auffordert, sich zu erkennen zu geben. Auf die Anforderungsnachricht hin schalten die Busteilnehmer 14.2 und 14.4 in Schritt 140 die Transistoren 38 durch Aktivieren des zweiten GPIO-Pins 36 jeweils in einen leitenden Zustand. Hierdurch wird ein Kurzschluss zwischen den Ausgangskontakten 19b erzeugt.

Im Schritt 150 misst die Zentraleinheit 12 daraufhin wieder die Spannung am Prüfstromkreis 22. Anhand der nun gemessenen Spannung wird im Schritt 160 erkannt, welcher der näheste Busteilnehmer 14 ohne Busadresse ist. Im vorliegenden Beispiel wird erkannt, dass die vom ADC 30 gemessene Spannung anzeigt, dass lediglich zwei Prüf-Widerstände 20 zu diesem Zeitpunkt elektrisch wirksam im Prüfstromkreis 22 sind. Hierdurch ergibt sich in Schritt 160, dass momentan zwei Grundplatten "erfassbar" sind. Die Anzahl der erfassbaren Grundplatten wird nun im Schritt 170 mit der Anzahl der ursprünglich festgestellten Grundplatten verglichen. Ist die Anzahl unterschiedlich, so wird im vorliegenden Beispiel für den Busteilnehmer 14.2 mittels einer Broadcast-Nachricht (Zuweisungsnachricht) im Schritt 180 die Busadresse für den Busteilnehmer 14.2 versandt. Nachdem der Busteilnehmer 14.2 mittels seines Komparators erkennen kann, dass er der der Zentraleinheit 12 nächste Busteilnehmer 14 ohne Busadresse ist, übernimmt der Busteilnehmer 14.2 die Busadresse im Schritt 190 und bestätigt den Empfang mittels eines weiteren Broadcasts. Der Empfang kann alternativ auch mit einer regulären Nachricht quittiert werden, insbesondere wenn die Adresse der Zentraleinheit 12 dem Busteilnehmer 14.2 bekannt ist. Anschließend deaktiviert der Busteilnehmer 14.2 seinen zweiten GPIO-Pin 36, wodurch das Kurzschließen durch den zweiten Busteilnehmer 14.2 beendet wird. Das Verfahren durchläuft nun nochmals die Schritte 150 bis 190, um auch dem Busteilnehmer 14.4 seine Adresse zuzuweisen.

Durch die Zuweisung der Adressen an die Busteilnehmer 14.2 und 14.4 ergibt sich für die Zentraleinheit (12), dass die Grundplatte 16.3 leer ist und keinen Busteilnehmer aufweist.

Wird nach dem Zuweisen an den Busteilnehmer 14.4 im Schritt 170 festgestellt, dass die nun gemessene Anzahl von Grundplatten 16 der erwarteten Anzahl von Grundplatten 16 aus Schritt 120 entspricht, wird zu Schritt 200 übergegangen, in welchem eine vorbestimmte Zeit abgewartet wird, bevor wiederum im Schritt 130 nach neuen Busteilnehmern ohne Busadresse gesucht wird. Der Übergang von Schritt 200 zu Schritt 130 ermöglicht insbesondere das Hot-Swapping von zusätzlichen Busteilnehmern 14.

Es ist zu erkennen, dass durch das Vorsehen von Prüfelementen, d.h. Prüf-Widerständen 22, in den Grundplatten 16 eine automatische Erkennung der mechanischen Position von Busteilnehmern 14 durch die Zentraleinheit 12 ermöglicht wird. Hierdurch kann automatisiert eine Adressvergabe an Busteilnehmer 14 erfolgen, wobei sich die Adressvergabe zudem an der tatsächlichen physikalischen Position der Busteilnehmer 14 orientiert.

### Bezugszeichenliste

- 10: System
- 12: Zentraleinheit
- 14: Busteilnehmer
- 16: Grundplatte
- 18: Steckverbinder
- 19a: Eingangskontakt
- 19b: Ausgangskontakt
- 20: Prüf-Widerstand
- 22: Prüfstromkreis
- 24: Abschlusselement
- 26: Rückleitungen
- 28: Stromquelle
- 30: ADC
- 32: Komparator
- 34: erster GPIO-Pin
- 36: zweiter GPIO-Pin
- 38: Transistor

- 100: zweite GPIO-Pins 36 deaktivieren
- 110: Spannungsmessung mit ADC 30
- 120: Anzahl N der Grundplatten 16 bestimmen
- 130: Anforderungsnachricht senden
- 140: Kurzschließen durch Aktivieren des zweiten GPIO-Pins 36
- 150: Spannung am Prüfstromkreis 22 mittels ADC 30 messen
- 160: Bestimmen der Anzahl A von Grundplatten, welche noch elektrisch wirksam in dem Prüfstromkreis 22 sind
- 170: Vergleich, ob N = A
- 180: Versenden der Busadresse mittels Zuweisungsnachricht
- 190: Übernahme der Busadresse, Bestätigung und Deaktivierung des zweiten GPIO-Pins 36
- 200: Wartezeit bis zur Erkennung von neu hinzugekommenen Busteilnehmern 14

## Patentansprüche

1. Verfahren zur Adressvergabe an an einen Datenbus angeschlossene Busteilnehmer (14), bei welchem
- die Busteilnehmer (14) elektrisch mit jeweils einer Grundplatte (16) gekoppelt werden, wobei die Grundplatten (16) jeweils ein elektrisches Prüfelement (20) umfassen,
- die Grundplatten (16) entlang einer Reihe elektrisch jeweils mit benachbarten Grundplatten (16) verbunden werden, wobei die Grundplatten (16) einen Prüfstromkreis (22) bilden,
- eine Zentraleinheit (12) an den Prüfstromkreis (22) angeschlossen wird,
- ein Prüfstrom in den Prüfstromkreis (22) eingeprägt wird,
- zumindest ein Busteilnehmer (14) eine Veränderung des Prüfstromkreises (22) vornimmt,
- die Veränderung des Prüfstromkreises (22) mittels der Zentraleinheit (12) gemessen wird,
- basierend auf der Veränderung des Prüfstromkreises (22) mittels der Zentraleinheit (12) eine physikalische Position des die Veränderung vornehmenden Busteilnehmers (14) oder eines Busteilnehmers (14) ohne Busadresse ermittelt und dem die Veränderung vornehmenden Busteilnehmer (14) oder dem Busteilnehmer (14) ohne Busadresse eine der physikalischen Position entsprechende Busadresse zugewiesen wird.

2. Verfahren nach Anspruch 1,
wobei die Veränderung durch den die Veränderung vornehmenden Busteilnehmer (14) ein Kurzschließen des Prüfstromkreises (22) umfasst.

3. Verfahren nach Anspruch 1 oder 2,
wobei die Veränderung des Prüfstromkreises (22) auf eine Anforderungsnachricht der Zentraleinheit (12) hin erfolgt, wobei auf die Anforderungsnachricht hin die Veränderung des Prüfstromkreises (22) von den Busteilnehmern (14) vorgenommen wird, welchen noch keine Busadresse zugewiesen wurde.

4. Verfahren nach einem der vorstehenden Ansprüche,
wobei nach dem Ermitteln der Position des die Veränderung vornehmenden Busteilnehmers (14) die Busadresse mittels einer Zuweisungsnachricht zugewiesen wird.

5. Verfahren nach Anspruch 4,
wobei von den Busteilnehmern (14) ohne Busadresse detektiert wird, ob ein der Zentraleinheit (12) näherer Busteilnehmer (14) eine Veränderung des Prüfstromkreises (22) vornimmt, wobei die mit der Zuweisungsnachricht übermittelte Busadresse von demjenigen Busteilnehmer (14) ohne Busadresse übernommen wird, welcher der Zentraleinheit (12) am nächsten ist.

6. Verfahren nach Anspruch 5,
wobei zur Detektion, ob durch einen der Zentraleinheit (12) näheren Busteilnehmer (14) eine Veränderung des Prüfstromkreises (22) vorgenommen wird, eine Spannung an dem Prüfelement (20) der Grundplatte (16) des jeweiligen Busteilnehmers (14) ermittelt wird.

7. Verfahren nach einem der vorstehenden Ansprüche,
wobei mittels der Grundplatte (16) auch die Übertragung des Datenbusses an die Busteilnehmer (14) und die Zentralsteuerung erfolgt.

8. Verfahren nach einem der vorstehenden Ansprüche,
wobei das Prüfelement (20) jeweils einen ohmschen Widerstand und/oder eine Diode umfasst.

9. Verfahren nach einem der vorstehenden Ansprüche,
wobei erkannt wird, ob Grundplatten (16) ohne Busteilnehmer (14) vorhanden sind.

10. Verfahren nach Anspruch 9,
wobei eine Position zumindest einer Grundplatte (16) ohne Busteilnehmer (14) ermittelt wird.

11. Verfahren nach einem der vorstehenden Ansprüche,
wobei nach der letzten Grundplatte (16) ein Abschlusselement (24) vorgesehen ist, welches den Prüfstromkreis (22) schließt,
wobei ein Fehlen des Abschlusselements (24) von der Zentraleinheit (12) erkannt werden kann.

12. Verfahren nach einem der vorstehenden Ansprüche,
wobei das Verfahren wiederholt ausgeführt wird.

13. Verfahren nach einem der vorstehenden Ansprüche,
wobei die Busteilnehmer (14) lösbar mit der jeweiligen Grundplatte (16) verbunden sind.

14. Verfahren nach einem der vorstehenden Ansprüche,
wobei der Datenbus ein Feldbus ist und/oder die Busteilnehmer (14) zumindest teilweise Input-Output-Module sind.

15. System (10) umfassend eine Zentraleinheit (12) und eine Mehrzahl von Busteilnehmern (14), welche jeweils mit einer Grundplatte (16) elektrisch gekoppelt sind, wobei die Busteilnehmer (14) an einen Datenbus angeschlossene sind, wobei
- die Grundplatten (16) jeweils ein elektrisches Prüfelement (20) umfassen,
- die Grundplatten (16) entlang einer Reihe elektrisch jeweils mit benachbarten Grundplatten (16) verbunden sind, wodurch die Grundplatten (16) einen Prüfstromkreis (22) bilden,
- die Zentraleinheit (12) an den Prüfstromkreis (22) angeschlossen ist,
- ein Prüfstrom in den Prüfstromkreis (22) eingeprägt wird,
- zumindest ein Busteilnehmer (14) ausgebildet ist, eine Veränderung des Prüfstromkreises (22) vorzunehmen,
- die Zentraleinheit (12) ausgebildet ist, die Veränderung des Prüfstromkreises (22) zu messen,
- die Zentraleinheit (12) ausgebildet ist, basierend auf der Veränderung des Prüfstromkreises (22) eine physikalische Position des die Veränderung vornehmenden Busteilnehmers (14) oder eines Busteilnehmers (14) ohne Busadresse zu ermitteln und dem die Veränderung vornehmenden Busteilnehmer (14) oder dem Busteilnehmer (14) ohne Busadresse eine der physikalischen Position entsprechende Busadresse zuzuweisen.

## Claims

1. A method of assigning addresses to bus participants (14) connected to a data bus, in which
- the bus participants (14) are electrically coupled to a respective base plate (16), with the base plates (16) each comprising an electrical test element (20);
- the base plates (16) are electrically connected along a row to adjacent base plates (16) in each case, with the base plates (16) forming a test circuit (22);
- a central unit (12) is connected to the test circuit (22);
- a test current is impressed into the test circuit (22);
- at least one bus participant (14) makes a change to the test circuit (22);
- the change of the test circuit (22) is measured by means of the central unit (12);
- based on the change of the test circuit (22), by means of the central unit (12), a physical position of the bus participant (14) making the change or of a bus participant (14) without a bus address is determined and a bus address corresponding to the physical position is assigned to the bus participant (14) making the change or to the bus participant (14) without a bus address.

2. A method in accordance with claim 1,
wherein the change by the bus participant (14) making the change comprises short-circuiting the test circuit (22).

3. A method in accordance with claim 1 or claim 2,
wherein the change of the test circuit (22) takes place in response to a request message of the central unit (12), wherein, in response to the request message, the change of the test circuit (22) is made by the bus participants (14) to which no bus address has yet been assigned.

4. A method in accordance with any one of the preceding claims,
wherein, after the determination of the position of the bus participant (14) making the change, the bus address is assigned by means of an assignment message.

5. A method in accordance with claim 4,
wherein it is detected by the bus participants (14) without a bus address whether a bus participant (14) closer to the central unit (12) makes a change to the test circuit (22), wherein the bus address transmitted by the assignment message is taken over by that bus participant (14) without a bus address that is closest to the central unit (12).

6. A method in accordance with claim 5,
wherein, in order to detect whether a change of the test circuit (22) is made by a bus participant (14) closer to the central unit (12), a voltage is determined at the test element (20) of the base plate (16) of the respective bus participant (14).

7. A method in accordance with any one of the preceding claims,
wherein the transfer of the data bus to the bus participants (14) and to the central control also takes place by means of the base plate (16).

8. A method in accordance with any one of the preceding claims,
wherein the test element (20) comprises a respective ohmic resistor and/or a diode.

9. A method in accordance with any one of the preceding claims,
wherein it is recognized whether base plates (16) without bus participants (14) are present.

10. A method in accordance with claim 9,
wherein a position of at least one base plate (16) without bus participants (14) is determined.

11. A method in accordance with any one of the preceding claims,
wherein a termination element (24), which closes the test circuit (22), is provided after the last base plate (16),
wherein an absence of the termination element (24) can be recognized by the central unit (12).

12. A method in accordance with any one of the preceding claims,
wherein the method is performed repeatedly.

13. A method in accordance with any one of the preceding claims,
wherein the bus participants (14) are releasably connected to the respective base plate (16).

14. A method in accordance with any one of the preceding claims,
wherein the data bus is a field bus and/or at least some of the bus participants (14) are input-output modules.

15. A system (10) comprising a central unit (12) and a plurality of bus participants (14), which are each electrically coupled to a base plate (16), with the bus participants (14) being connected to a data bus, wherein
- the base plates (16) each comprise an electrical test element (20);
- the base plates (16) are electrically connected along a row to adjacent base plates (16) in each case, whereby the base plates (16) form a test circuit (22);
- the central unit (12) is connected to the test circuit (22);
- a test current is impressed into the test circuit (22);
- at least one bus participant (14) is configured to make a change to the test circuit (22);
- the central unit (12) is configured to measure the change of the test circuit (22);
- the central unit (12) is configured to determine, based on the change of the test circuit (22), a physical position of the bus participant (14) making the change or of a bus participant (14) without a bus address and to assign a bus address corresponding to the physical position to the bus participant (14) making the change or to the bus participant (14) without a bus address.

## Revendications

1. Procédé d'attribution d'adresses à des participants de bus (14) connectés à un bus de données, dans lequel
- les participants de bus (14) sont couplés électriquement à une plaque de base (16) respective, les plaques de base (16) comprenant chacune un élément de contrôle électrique (20),
- les plaques de base (16) sont reliées chacune électriquement le long d'une rangée à des plaques de base (16) voisines, les plaques de base (16) formant un circuit électrique de contrôle (22),
- une unité centrale (12) est connectée au circuit électrique de contrôle (22),
- un courant de contrôle est injecté dans le circuit électrique de contrôle (22),
- au moins un participant de bus (14) provoque une modification du circuit électrique de contrôle (22),
- la modification du circuit électrique de contrôle (22) est mesurée au moyen de l'unité centrale (12),
- sur la base de la modification du circuit électrique de contrôle (22), au moyen de l'unité centrale (12), une position physique du participant de bus (14) provoquant la modification ou d'un participant de bus (14) sans adresse de bus est déterminée, et une adresse de bus, correspondant à la position physique, est attribuée au participant de bus (14) provoquant la modification ou au participant de bus (14) sans adresse de bus.

2. Procédé selon la revendication 1,
dans lequel la modification par le participant de bus (14) provoquant la modification comprend un court-circuitage du circuit électrique de contrôle (22).

3. Procédé selon la revendication 1 ou 2,
dans lequel la modification du circuit électrique de contrôle (22) s'effectue en réponse à un message de demande de l'unité centrale (12), et, en réponse au message de demande, la modification du circuit électrique de contrôle (22) est provoquée par les participants de bus (14) auxquels aucune adresse de bus n'a encore été attribuée.

4. Procédé selon l'une des revendications précédentes,
dans lequel, une fois que la position du participant de bus (14) provoquant la modification est déterminée, l'adresse de bus est attribuée au moyen d'un message d'attribution.

5. Procédé selon la revendication 4,
dans lequel les participants de bus (14) sans adresse de bus détectent si un participant de bus (14) plus proche de l'unité centrale (12) provoque une modification du circuit électrique de contrôle (22), l'adresse de bus transmise avec le message d'attribution étant reprise par le participant de bus (14) sans adresse de bus qui est le plus proche de l'unité centrale (12).

6. Procédé selon la revendication 5,
dans lequel, pour détecter si une modification du circuit électrique de contrôle (22) est provoquée par un participant de bus (14) plus proche de l'unité centrale (12), une tension au niveau de l'élément de contrôle (20) de la plaque de base (16) du participant de bus (14) respectif est déterminée.

7. Procédé selon l'une des revendications précédentes,
dans lequel la transmission du bus de données aux participants de bus (14) et la commande centrale s'effectuent également au moyen de la plaque de base (16).

8. Procédé selon l'une des revendications précédentes,
dans lequel l'élément de contrôle (20) comprend une résistance ohmique et/ou une diode respective(s).

9. Procédé selon l'une des revendications précédentes,
dans lequel on détecte s'il y a des plaques de base (16) sans participant de bus (14).

10. Procédé selon la revendication 9,
dans lequel une position d'au moins une plaque de base (16) sans participant de bus (14) est déterminée.

11. Procédé selon l'une des revendications précédentes,
dans lequel un élément de terminaison (24) est prévu après la dernière plaque de base (16), lequel ferme le circuit électrique de contrôle (22),
l'absence de l'élément de terminaison (24) peut être détectée par l'unité centrale (12).

12. Procédé selon l'une des revendications précédentes,
dans lequel le procédé est exécuté de manière répétée.

13. Procédé selon l'une des revendications précédentes,
dans lequel les participants de bus (14) sont reliés de manière amovible à la plaque de base (16) respective.

14. Procédé selon l'une des revendications précédentes,
dans lequel le bus de données est un bus de terrain, et/ou les participants de bus (14) sont au moins partiellement des modules d'entrée-sortie.

15. Système (10) comprenant une unité centrale (12) et une pluralité de participants de bus (14), qui sont couplés chacun électriquement à une plaque de base (16), les participants de bus (14) étant connectés à un bus de données, dans lequel
- les plaques de base (16) comprennent chacune un élément de contrôle électrique (20),
- les plaques de base (16) sont reliées chacune électriquement le long d'une rangée à des plaques de base (16) voisines, ce qui fait que les plaques de base (16) forment un circuit électrique de contrôle (22),
- l'unité centrale (12) est connectée au circuit électrique de contrôle (22),
- un courant de contrôle est injecté dans le circuit électrique de contrôle (22),
- au moins un participant de bus (14) est réalisé pour provoquer une modification du circuit électrique de contrôle (22),
- l'unité centrale (12) est réalisée pour mesurer la modification du circuit électrique de contrôle (22),
- l'unité centrale (12) est réalisée pour déterminer, sur la base de la modification du circuit électrique de contrôle (22), une position physique du participant de bus (14) provoquant la modification ou d'un participant de bus (14) sans adresse de bus, et pour attribuer une adresse de bus, correspondant à la position physique, au participant de bus (14) provoquant la modification ou au participant de bus (14) sans adresse de bus.
